# FASCICULE DE BREVET EUROPEEN

(11) **EP 0 612 603 B1**
(45) Date de publication et mention de la délivrance du brevet: **21.07.1999**
(21) Numéro de dépôt: 94400364.9
(22) Date de dépôt: 21.02.1994
(51) Int. Cl.: B29C 47/00

(54) **Méthode pour faciliter l'écoulement d'un matériau élastomère au travers d'un outil**
Verfahren zur Verbesserung der Fliesseigenschaften von Elastomeren beim Durchströmen eines Werkzeuges
Process for improvement of the floor properties of elastomers by flowing through a die

(30) Priorité: 22.02.1993 FR 9301982
(43) Date de publication de la demande: 31.08.1994
(73) Titulaire: HUTCHINSON, 75008 Paris (FR)
(72) Inventeur: Zarife, Victor, F-45200 Montargis (FR)
(74) Mandataire: Doireau, Marc

(56) Documents cités:
- EP-A- 0 370 394
- EP-A- 0 394 958
- DD-A- 134 052
- DD-A- 138 523
- DE-A- 1 515 285
- FR-A- 2 225 275

## Description

La présente invention concerne une méthode pour faciliter l'écoulement d'un matériau élastomère au travers d'un outil, tel que la filière d'une machine à extruder ou la buse d'une presse à injecter par exemple, du type consistant à utiliser des ultrasons propagés à partir d'au moins une source émettrice d'ultrasons placée à proximité de l'outil.

Ce type de méthode est notamment décrite dans le document DT-134 052 pour l'extrusion de matériaux thermoplastiques. Concrètement, les ultrasons sont utilisés pour provoquer une élévation de la température du matériau au-delà de sa température de transition vitreuse. Il en résulte un abaissement de la viscosité du matériau, ce qui facilite son écoulement au travers de la filière d'extrusion. Pour la mise en oeuvre de cette méthode, le document prévoit notamment l'utilisation de deux sources émettrices d'ultrasons qui sont situées respectivement de part et d'autre de la filière d'extrusion et au droit de celle-ci, la direction de propagation des ultrasons se faisant suivant une direction radiale perpendiculaire à l'axe d'écoulement du matériau dans la filière d'extrusion.

Le document EP-A-0 394 958 décrit une méthode pour faciliter l'écoulement d'un matériau de moulage au travers d'un outil, tel que la filière d'une machine à extruder ou la buse d'une presse à injecter par exemple, du type consistant à utiliser plusieurs sources émettrices d'ultrasons pour propager des ultrasons suivant une direction parallèle à l'axe d'écoulement du matériau au travers de l'outil, et à disposer les sources émettrices d'ultrasons à proximité de l'outil et en amont de celui-ci.

Cependant, il n'est pas possible de transposer directement une telle méthode à des matériaux élastomères, en particulier des matériaux thermodurcissables comme le caoutchouc par exemple, compte-tenu de leur évolution irréversible dans le temps sous l'action de la chaleur.

Le but général de l'invention est de pouvoir fabriquer notamment des profilés en matériaux élastomères, qui soient parfaitement homogènes sur toute leur longueur avec une section droite uniforme et constante, pour obtenir des produits finis de meilleure qualité et d'aspect extérieur amélioré, en se basant sur une méthode du type précité.

A cet effet, l'invention propose une méthode pour faciliter l'écoulement d'un matériau élastomère au travers d'un outil, tel que la filière d'une machine à extruder ou la buse d'une presse à injecter par exemple, qui est caractérisée en ce qu'elle consiste à interposer une pièce d'isolation acoustique entre l'outil et le corps de la machine à extruder ou de la presse à injecter qui contient le matériau élastomère, et à utiliser les ultrasons émis pour faire vibrer seulement l'outil de la machine à extruder ou de la presse à injecter.

Selon cette méthode, l'action des ultrasons a pour effet de faire vibrer l'outil, ce qui permet de réduire les forces de frottement entre sa paroi interne, qui délimite la section de passage de l'outil, et le matériau pour faciliter l'écoulement de ce dernier en procurant les résultats précités.

Selon une autre caractéristique de la méthode selon l'Invention, on peut utiliser soit une seule source émettrice d'ultrasons disposée suivant l'axe d'écoulement du matériau au travers de l'outil et en amont de celui-ci, en considérant le sens d'écoulement du matériau, soit plusieurs sources émettrices d'ultrasons radialement régulièrement réparties autour de l'outil et placées également en amont de celui-ci en considérant le sens d'écoulement du matériau, lesdites sources étant avantageusement excitées avec un déphasage tel que l'amplitude des ultrasons soit maximum tout au long et autour de la section de passage de l'outil.

L'invention concerne également un système de mise en oeuvre de la méthode selon l'invention, ce système comprenant au moins une source émettrice d'ultrasons constituée à partir d'un matériau piézoélectrique, et qui est caractérisé en ce que ladite source est associée à au moins un élément destiné à propager les ultrasons jusqu'à l'outil suivant une direction parallèle à l'axe d'écoulement du matériau.

Selon une autre autre caractéristique du système selon l'invention, la source émettrice d'ultrasons est située en amont de l'outil, en considérant le sens d'écoulement du matériau au travers de l'outil.

Dans un premier mode de réalisation, la source émettrice d'ultrasons, montée en amont de l'outil, est disposée suivant l'axe d'écoulement du matériau en étant accolée à l'outil avec interposition éventuelle d'un élément de couplage destiné à propager les ultrasons jusqu'à l'outil.

Toujours selon ce premier mode de réalisation, la source émettrice des ultrasons est constituée à partir d'un matériau piézoélectrique, tel une céramique, sous la forme d'au moins un disque annulaire aligné suivant l'axe d'écoulement du matériau et fixé au support de l'outil qui est axialement aligné avec celui-ci.

Ce premier mode de réalisation de l'invention peut être avantageusement utilisé pour l'extrusion de tubes ou des profilés de petit diamètre par exemple.

Dans un second mode de réalisation, plusieurs sources émettrices d'ultrasons sont placées en amont de l'outil en étant régulièrement réparties radialement autour de celui-ci, chaque source émettant des ultrasons suivant une direction radiale par rapport à l'axe d'écoulement du matériau, qui sont propagés au travers d'un guide d'ondes jusqu'au support de l'outil, ledit support étant axialement aligné avec l'outil, les ultrasons se propageant ensuite jusqu'à l'outil au travers de ce support suivant une direction parallèle à l'axe d'écoulement du matériau au travers de l'outil.

Suivant une autre caractéristique de l'invention appliquée à ces deux modes de réalisation, la distance moyenne séparant la ou les sources émettrices d'ultrasons et l'outil, est calculée de manière à ce que l'outil soit sensiblement placé au niveau d'un ventre correspondant à un maximum d'amplitude des vibrations propagées jusqu'à l'outil, la position de ce ventre étant fonction de la fréquence d'excitation et de la phase des ultrasons émis.

Avantageusement, dans le second mode de réalisation, les sources émettrices d'ultrasons sont excitées avec un déphasage tel que l'on obtient une onde de propagation hélicoïdale tout au long et autour de la section de passage de l'outil.

Ce second mode de réalisation peut être avantageusement utilisé pour la fabrication de tubes ou de profilés de grand diamètre.

D'une manière générale, l'invention s'applique notamment à des machines à extruder où l'outil est constitué par une filière d'extrusion, et à des machines à injecter où l'outil est constitué par une buse d'injection, les produits résultants, en caoutchouc par exemple, étant notamment utilisés dans le domaine de l'industrie automobile.

D'autres avantages, caractéristiques et détails de l'invention ressortiront de la description explicative qui va suivre faite en référence aux dessins annexés, donnés uniquement à titre d'exemple, et dans lesquels :
- la figure 1 est une vue en coupe longitudinale schématique d'une machine à extruder équipée d'un système à ultrasons conforme à l'invention suivant un premier mode de réalisation,
- la figure 2 est une vue en coupe longitudinale schématique et partielle d'une machine à extruder équipée d'un système à ultrasons conforme à l'invention suivant un second mode de réalisation, et
- la figure 3 est une vue en bout de la tête d'extrusion d'une machine à extruder équipée d'un système à ultrasons conforme à l'invention suivant un troisième mode de réalisation.

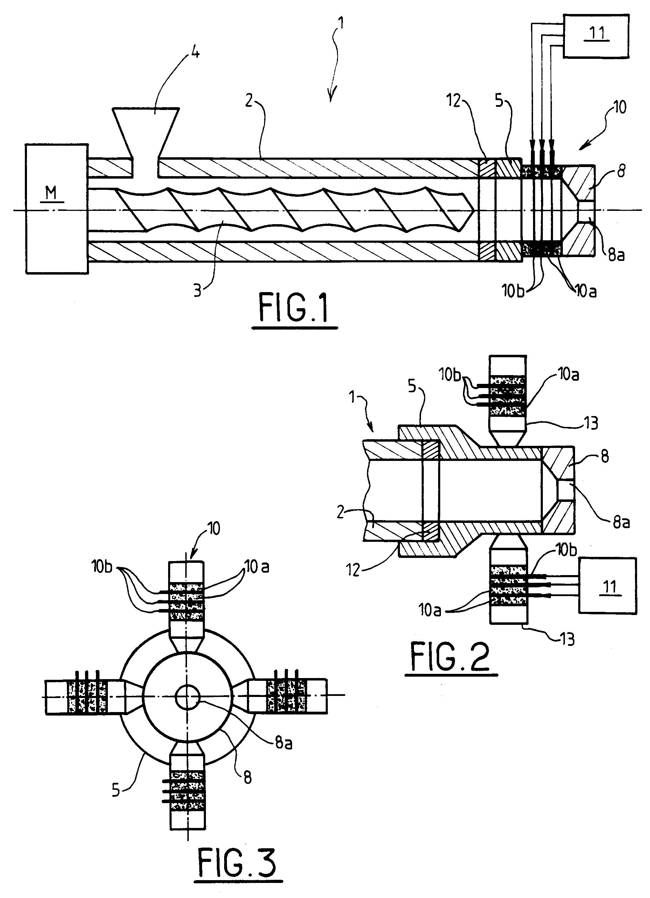

En se reportant à la figure 1, la machine à extruder 1 telle que schématiquement représentée est constituée, d'une façon connue en soi, d'un corps allongé 2 ou fourreau dans lequel est logée 22 une vis sans fin 3 entraînée en rotation par un moteur M.

Une trémie d'admission 4 débouche radialement dans le corps 2 et vers une extrémité de celui-ci, en l'occurrence celle qui est adjacente au moteur M. L'autre extrémité du corps 2 se prolonge axialement par une tête d'extrusion 5 terminée par une filière d'extrusion 8.

D'une manière générale, on introduit le matériau à extruder par la trémie 4 située à une extrémité du corps 2. La vis sans fin 3, entraînée en rotation par le moteur M, achemine le matériau en direction de la tête d'extrusion 5. Au cours de cet acheminement, le matériau est généralement chauffé et il arrive au niveau de la tête d'extrusion 5 dans un état visqueux homogène pour s'écouler, à débit constant, à travers la filière 8 pour prendre une forme définie par la section de passage 8a de la filière 8.

Selon l'invention, une telle extrudeuse est utilisée pour fabriquer des profilés en un matériau élastomère, comme le caoutchouc par exemple. Pour faciliter l'écoulement de ce matériau au travers de la filière 8, il est prévu d'utiliser des ultrasons pour diminuer les frottements entre le matériau et la paroi interne de la filière 8 qui définit la section de passage 8a du matériau.

Selon un premier mode de réalisation illustré à la figure 1, les ultrasons sont émis à partir d'une source 10 qui est montée suivant l'axe d'écoulement du matériau et qui est supportée par la tête d'extrusion 5 en amont de la filière 8. Cette source 10 est constituée par plusieurs disques 10a réalisés dans une céramique piézoélectrique par exemple. Ces anneaux 10a sont accollés les uns aux autres avec interposition de disques métalliques 10b reliés à un circuit d'excitation 11, connu en soi. Cette source 10 est elle-même accolée à la tête d'extrusion 5 en amont de la filière 8, avec une pièce d'isolation acoustique 12 montée entre la tête 5 et l'extrémité adjacente du corps 2 de la machine à extruder.

Avantageusement, la distance entre la source 10 et la filière 8 sera déterminée de manière à obtenir un ventre de vibration au niveau de la section de passage 8a de l'outil 8, cette distance étant fonction de la fréquence et de la phase d'excitation de la source 10.

Dans ces conditions, les ultrasons émis par les céramiques piézoélectriques 10a sont directement transmis par la tête d'extrusion 5 à la filière 8 suivant une direction parallèle à l'axe d'écoulement du matériau. Les ultrasons provoquent ainsi une mise en vibration de la filière 8, ce qui a pour effet de diminuer les frottements au passage du matériau dans la section de passage 8a définie par la filière 8.

Il est ainsi possible de fabriquer des produits extrudés, tels que des tubes ou des profilés en un matériau élastomère comme le caoutchou par exemple, qui présentent une section droite uniforme et homogène, ainsi qu'un état de surface lisse dépourvu d'aspérités apparentes.

Selon un second mode de réalisation illustré schématiquement à la figure 2, la source 10 qui émet des ultrasons n'est plus disposée suivant l'axe d'écoulement du matériau. Plus précisément, il est prévu au moins deux sources 10 émettrices d'ultrasons qui sont par exemple disposées radialement de part et d'autre de la tête d'extrusion 5 et, en amont de la filière 8. Chaque source 10 est constituée de plusieurs plaques 10a en céramique piézoélectrique accollées les uns aux autres avec interposition de plaques métalliques 10b reliées à un circuit d'excitation 11. Les ultrasons émis par chaque source 10 se propagent suivant une direction radiale, par rapport au sens d'écoulement du matériau, au travers d'un guide d'ondes 13 fixé, à une extrémité, à la tête d'extrusion 5. Il en résulte que ces ultrasons sont ensuite propagés par la tête 5 jusqu'à la filière 8 suivant une direction parallèle à l'axe d'écoulement du matériau. La filière 8 est ainsi mise en vibration pour obtenir globalement les mêmes résultats que ceux procurés dans le premier mode de réalisation précité.

Comme précédemment, il est prévu une pièce d'isolation acoustique 12 montée en bout du corps 2 de l'extrudeuse et qui est reliée à la tête d'extrusion 5, cette dernière formant un élément de couplage intermédiaire pour propager les ultrasons jusqu'à la filière 8.

D'une manière préférentielle, on prévoit au moins trois sources 10 d'émission d'ultrasons régulièrement réparties radialement autour de la tête d'extrusion 5 et en amont de la filière 8. Ces sources 10 peuvent être avantageusement situées à une distance de la filière 8 telle que l'on obtienne un maximum d'amplitude de vibration au niveau de la section de passage 8a de la filière 8, cette distance étant fonction de la fréquence et de la phase d'excitation des sources 10.

Enfin, pour améliorer encore l'écoulement du matériau au travers de la filière 8, on peut envisager un déphasage approprié entre les sources 10, de façon à créer une onde de propagation hélicoïdale des ultrasons capable de diminuer les forces de frottement d'une manière quasiment uniforme tout autour et tout au long de la section de passage 8a de la filière 8.

Un troisième mode de réalisation dérivé du précédent est illustré sur la figure 3 avec quatre sources 10 émettrices d'ultrasons réparties régulièrement autour de la tête d'extrusion 5 et en amont de la filière 8, en considérant le sens d'écoulement du matériau.

Selon ces deux derniers modes de réalisation, la transmission des ultrasons s'effectue par l'intermédiaire des guides d'ondes 13 et de la tête d'extrusion 5, cette dernière formant le support de l'outil.

Bien entendu, l'invention n'est nullement limitée aux deux modes de réalisation précédemment décrits, des variantes pouvant être envisagées pour mettre en oeuvre la méthode selon l'invention qui consiste essentiellement à transmettre des ultrasons jusqu'à un outil, tel qu'une filière d'extrusion ou une buse d'injection, suivant un axe parallèle à l'écoulement d'un matériau élastomère au travers de la section de passage de l'outil pour la fabrication de tubes et de profilés en caoutchouc par exemple.

## Revendications

1. Méthode pour faciliter l'écoulement d'un matériau élastomère au travers d'un outil, tel que la filière d'une machine à extruder ou la buse d'une presse à injecter par exemple, du type consistant à utiliser plusieurs sources (10) emettrices d'ultrasons pour propager des ultrasons suivant une direction parallèle à l'axe d'écoulement du matériau au travers de l'outil, et à disposer les sources émettrices d'ultrasons à proximité de l'outil et en amont de celui-ci, caracterisée en ce qu'elle consiste, à interposer une pièce d'isolation acoustique (12) entre l'outil et le corps de la machine à extruder ou de la presse à injecter qui contient le matériau élastomère, et à utiliser les ultrasons émis pour faire vibrer seulement l'outil de la machine à extruder ou de la presse à injecter.

2. Méthode selon la revendication 1, caractérisée en ce qu'elle consiste à créer des déphasages tels entre lesdites sources (10), que l'on obtient une onde de propagation hélicoïdale au travers de l'outil.

3. Système de mise en oeuvre de la méthode selon la revendication 1 ou 2, pour faciliter l'écoulement d'un matériau élastomère au travers d'un outil, tel que la filière d'une machine à extruder ou la buse d'une presse à injecter par exemple, du type comprenant plusieurs sources (10) émettrices d'ultrasons qui sont régulièrement réparties autour de l'outil (8) et en amont de celui-ci, les ultrasons étant transmis radialement jusqu'à un support (5) de l'outil (8) au travers d'un guide d'ondes (13), puis jusqu'à l'outil (8) suivant une direction parallèle à l'axe d'écoulement du matériau, caractérisé en ce qu'il comprend une pièce d'isolation acoustique (12) intercalée entre l'outil (8) et le corps (2) de la machine à extruder ou de la presse à injecter.

4. Système selon la revendication 3, caractérisé en ce que chaque source (10) émettrice d'ultrasons comprend au moins une céramique piézoélectrique sous la forme d'un disque (10a) encadré de deux disques métalliques (10b) reliés à un dispositif d'excitation (11).

5. Système selon la revendication 4, caractérisé en ce que la distance entre les sources (10) émettrices d'ultrasons et l'outil (8), est telle que l'on obtient un maximum d'amplitude des vibrations au niveau de la section de passage (8a) de l'outil (8), distance qui est fonction de la fréquence et de la phase d'excitation des sources (10).

6. Système selon la revendication 4 ou 5, caractérisé en ce qu'il comprend au moins trois sources (10) émettrices d'ultrasons, et en ce qu'un déphasage est créé au niveau desdites sources pour produire une onde de propagation hélicoïdale des vibrations se propageant tout au long et autour de la section de passage (8a) de l'outil (8).

7. Machine, telle qu'une extrudeuse, caractérisée en ce qu'elle est équipée d'un système tel que défini dans l'une quelconque des revendications 3 à 6, ledit système étant supporté par la tête d'extrusion de la machine.

## Claims

1. Method for facilitating the flow of an elastomeric material through a tool, such as the die of an extrusion machine or the nozzle of an injection moulding press for example, of the type which consists in using a plurality of ultrasound-emitting sources (18) for propagating ultrasound in a direction parallel to the axis on which the material flows through the tool, and in arranging the ultrasound-emitting sources in proximity to the tool and upstream thereof, characterized in that it consists in interposing an acoustic insulation part (12) between the tool and the body of the extrusion machine or of the injection moulding press which contains the elastomeric material, and in using the emitted ultrasound to cause only the tool of the extrusion machine or of the injection moulding press to vibrate.

2. Method according to Claim 1, characterized in that it consists in creating phase shifts between the said sources (10), such that a helical propagation wave through the tool is obtained.

3. System for implementing the method according to Claim 1 or 2, for facilitating the flow of an elastomeric material through a tool, such as the die of an extrusion machine or the nozzle of an injection moulding press for example, of the type comprising a plurality of ultrasound-emitting sources (10) which are regularly spaced around the tool (8) and upstream thereof, the ultrasound being transmitted radially as far as a support (5) of the tool (8) through a waveguide (13), then as far as the tool (8) in a direction parallel to the axis on which the material flows, characterized in that it comprises an acoustic insulation part (12) inserted between the tool (8) and the body (2) of the extrusion machine or of the injection moulding press.

4. System according to Claim 3, characterized in that each ultrasound-emitting source (10) comprises at least one piezoelectric ceramic in the form of a disc (10a) surrounded by two metal discs (10b) connected to an excitation device (11).

5. System according to Claim 4, characterized in that the distance between the ultrasound-emitting sources (10) and the tool (8) is such that a maximum amplitude of the vibrations is obtained at the passage section (8a) of the tool (8), which distance is a function of the frequency and of the excitation phase of the sources (10).

6. System according to Claim 4 or 5, characterized in that it comprises at least three ultrasound-emitting sources (10), and in that a phase shift is created at the said sources in order to produce a helical propagation wave of the vibrations propagating all along and around the passage section (8a) of the tool (8).

7. Machine, such an extruder, characterized in that it is equipped with a system as defined in any one of Claims 3 to 6, the said system being supported by the extrusion head of the machine.

## Patentansprüche

1. Verfahren zur Erleichterung des Strömens eines Elastomermaterials durch ein Werkzeug, wie beispielsweise das Spritzmundstück eines Extruders oder die Düse einer Spritzgußmaschine, wobei das Verfahren die Schritte aufweist Verwenden einer Vielzahl von Ultraschallsendequellen (10), um eine Ausbreitung von Ultraschall in eine Richtung parallel zur Materialstromrichtung durch das Werkzeug hindurch zu bewirken, und
Anordnung der Ultraschallsendequellen in der Nähe des Werkzeugs und stromaufwärts von diesem,
dadurch gekennzeichnet, daß dieses ferner die Schritte aufweist
Zwischenfügen eines Teils (12) zur akustischen Isolierung zwischen das Werkzeug und das Gehäuse des Extruders oder der Spritzgußmaschine mit dem Elastomermaterial und Verwenden des ausgestrahlten Ultraschalls, um nur das Werkzeug des Extruders oder der Spritzgußmaschine in Schwingung zu versetzen.

2. Verfahren nach Anspruch 1, dadurch gekennzeichnet, daß dieses aufweist
Erzeugen von solchen Phasenverschiebungen zwischen den Quellen (10), daß eine Welle mit spriralförmiger Ausbreitung durch das Werkzeug hindurch erhalten wird.

3. System zur Umsetzung des Verfahrens nach Anspruch 1 oder 2 zum Erleichtern des Strömens eines Elastomermaterials durch ein Werkzeug, wie z.B. das Spritzmundstück eines Extruders oder die Düse einer Spritzgußmaschine, wobei das System aufweist
mehrere Ultraschallsendequellen (10), die um des Werkzeug (8) herum und stromaufwärts von diesem regelmäßig verteilt sind, wobei der Ultraschall radial bis zu einer Halterung (5) des Werkzeugs (8) durch einen Wellenleiter (13) hindurch und dann bis zum Werkzeug (8) in eine Richtung parallel zur Materialströmungsachse übertragen wird, dadurch gekennzeichnet, daß dieses ein Teil (12) zur akustischen Isolierung aufweist, das zwischen das Werkzeug (8) und das Gehäuse (2) des Extruders oder der Spritzgußmaschine zwischengefügt ist.

4. System nach Anspruch 3, dadurch gekennzeichnet, daß jede Ultraschallsendequelle (10) zumindest eine piezoelektrische Keramik in Form einer Scheibe (10a), die von zwei, mit einer Erregungsvorrichtung (11) verbundenen Metallscheiben (10b) umgeben ist, aufweist.

5. System nach Anspruch 4, dadurch gekennzeichnet, daß der Abstand zwischen der Ultraschallsendequelle (10) und dem Werkzeug (8) so eingestellt ist, daß eine maximale Vibrationsamplitude auf Höhe des Querschnitts vom Durchlaß (8a) des Werkzeugs erhalten wird, wobei der Abstand von der Frequenz und der Phase der Erregung der Quellen (10) abhängt.

6. System nach Anspruch 4 oder 5, dadurch gekennzeichnet, daß es zumindest drei Ultraschallsendequellen (10) aufweist und daß eine Phasenverschiebung auf der Höhe der Quellen geschaffen wird, um eine Welle mit spiralförmiger Ausbreitung der Vibrationen am gesamten Querschnitt vom Durchlaß (8a) des Werkzeugs (8) entlang und um diesen herum zu erzeugen.

7. Maschine, wie ein Extruder, dadurch gekennzeichnet, daß diese mit einem System nach einem der Ansprüche 3 bis 6 versehen ist, wobei das System durch den Extrusionskopf der Maschine gehalten wird.
